# EUROPÄISCHE PATENTSCHRIFT

(11) **EP 3 324 128 B1**
(45) Veröffentlichungstag und Bekanntmachung des Hinweises auf die Patenterteilung: **02.01.2019**
(21) Anmeldenummer: 16002467.5
(22) Anmeldetag: 21.11.2016
(51) Int. Cl.: F24D 3/14, E04B 5/48, E06C 9/14

(54) **VORRICHTUNG UND VERWENDUNG ZUM TEMPERIEREN VON FUSSBÖDEN ODER WÄNDEN IN BAUWERKEN MIT VERRINGERUNG DER UNERWÜNSCHTEN WÄRMEPRODUKTION IM BEREICH VON ANBINDELEITUNGEN UND MONTAGE**
DEVICE AND USE FOR TEMPERING OF FLOORS OR WALLS IN STRUCTURES WITH REDUCTION OF THE UNWANTED HEAT PRODUCTION IN THE VICINITY OF CONNECTION LINES AND INSTALLATION
DISPOSITIF ET MÉTHODE POUR TEMPÉRER DES PLANCHERS OU DES MURS DANS DES BÂTIMENTS EN DIMINUANT LA GÉNÉRATION DE CHALEUR INDÉSIRABLE DANS LA ZONE DES TUBES DE LIAISON ET MONTAGE

(43) Veröffentlichungstag der Anmeldung: 23.05.2018
(73) Patentinhaber: Regatherm GmbH, 41748 Viersen (DE)
(72) Erfinder: WILLICH, Marco, 41748 Viersen (DE)
(74) Vertreter: Frese Patent - Patentanwälte

(56) Entgegenhaltungen:
- EP-A1- 1 531 306
- WO-A1-2016/066240
- DE-U1-202016 002 037

## Beschreibung

Die Erfindung betrifft eine Vorrichtung zum Temperieren von Fußböden oder Wänden in Bauwerken, durch die eine Verringerung der unerwünschten Wärmeproduktion im Bereich der Anbindeleitungen erreicht wird, und durch die eine weitere Verringerung von mechanischen Unebenheiten zwischen Rohrleitungen und Fußboden mittels Hohlkammerplatten erreicht wird. Die Vorrichtung weist einen geringen Platzbedarf auf und ermöglicht die Beheizung einer Mehrzahl an Räumen, ohne dass es zu einem Wärmeverlust durch die Rohrleitungen der Fußbodenheizung im Bereich der Anbindeleitungen kommt, wodurch auch der Raum, in den die Anbindeleitungen ausgehend vom Wärmereservoir in das zu temperierende Stockwerk erstmalig geleitet werden, unabhängig von den Anbindeleitungen und dadurch gleichmäßiger beheizt werden kann. Die Erfindung betrifft auch die Verwendung der Vorrichtung zum Temperieren von Bauwerken und ein Verfahren zum Herstellen und zur Montage der Vorrichtung.

Die Beheizung von Räumen in Bauwerken wird heutzutage oft mit Heizungen durchgeführt, die als Fußbodenheizungen ausgeführt sind. Solche Fußbodenheizungen beheizen Räume, indem aus einem Wärmereservoir ein erwärmter Wärmeträger durch Rohrleitungen geführt wird, die oberhalb des Etagengrundes und unterhalb des Estrichs des Raumes geführt werden und durch Wärmetausch mit dem Fußboden durch den Fußboden hindurch den darüber liegenden Raum erwärmen. Das Wärmereservoir liegt dabei üblicherweise in der darunterliegenden Etage, wobei die Rohrleitungen von dem Wärmereservoir und in dieses zurück durch den Etagengrund hindurch über dafür vorgesehene Kanäle in die zu beheizende Etage geleitet werden. Die Beheizung der zu beheizenden Etage wird dabei in der Regel in jedem in der Etage vorhandenen Raum durch einen eigenen Heizkreis mit den entsprechenden Rohrleitungen vorgenommen.

Bei der Beheizung der einzelnen Räume der zu beheizenden Etage müssen für jeden einzelnen Raum Rohrleitungen von dem Wärmereservoir durch die Kanäle durch den Etagengrund hindurchgeführt werden, um die Wärmeleistung für jeden einzelnen Raum regulieren zu können. Da die Kanäle für diese Rohrleitungen von dem Wärmereservoir und zurück stets nur in oder an einem Raum durch den Etagengrund geführt werden, ist an der Stelle dieser Kanäle eine Vielzahl von Rohrleitungen vorhanden, von denen aber nur wenige zur Beheizung des Raumes dienen, in dem die Kanäle durch den Etagengrund geführt werden. Die übrigen Leitungen, die nicht der Beheizung des Raumes dienen, werden nur durch diesen Raum geführt und dienen zur Weiterleitung des Wärmeträgers in die weiteren Räume. Diese Leitungen werden Anbindeleitungen genannt.

Das Vorhandensein von Anbindeleitungen in dem Raum, in dem die Kanäle durch den Etagengrund geführt werden, führt bei der Beheizung von Räumen mit einer Fußbodenheizung zu dem Problem, dass zusätzliche Wärmeleistung in diesen Raum eingebracht wird, die aber zu der Beheizung dieses Raumes selbst nicht erwünscht ist. Oft ist dieser Raum beispielsweise ein Flur oder eine Abstellkammer. Der Raum, in dem die Kanäle durch den Etagengrund geführt werden, hat in fast allen Ausführungsformen für Fußbodenheizungen einen eigenen Heizkreis und soll hierdurch unabhängig beheizt werden. Umgekehrt kühlt sich der Wärmeleiter bei der Durchleitung durch die Anbindeleitungen in dem Raum, in dem die Kanäle durch den Etagengrund geführt werden, weiter ab, was zusätzliche Heizleistung erfordert und deshalb auch aus diesem Grund nicht erwünscht ist, insbesondere, wenn dieser Raum selbst nicht beheizt werden soll.

Für dieses Problem wurden im Stand der Technik Lösungen erarbeitet. Das deutsche Gebrauchsmuster DE202015102823U1 beschreibt eine Rohranordnung, welche zur Durchleitung eines Wärmeträgers in eine zu beheizende Etage dient und welche mindestens eine Anbindeleitung für eine Fußbodenheizung aufweist, wobei diese Rohranordnung ein Rohr für ein fluides Temperaturmedium, eine das Rohr umgebende Dämmlage, und eine an der Dämmlage befestigte erste Klettvorrichtung zum Befestigen der Rohranordnung an einer Trägerschicht mit einer flächigen zweiten Klettvorrichtung aufweist. Dadurch wird vermieden, dass durch die Anbindeleitung eine Regelung der Raumtemperatur in dem jeweiligen Raum, in dem die Anbindeleitungen durch den Etagengrund geführt werden, erschwert wird, und Nebenräume über eine gewünschte Solltemperatur hinaus aufgeheizt werden, was zu einer Reduzierung der Energieeffizienz des Gesamtsystems führt.

Diese Anordnung führt zwar zu einer Verringerung des Wärmeverlusts durch die Anbindeleitungen, weist aber den Nachteil auf, dass die Anbindeleitungen durch eine zusätzliche Isolierschicht verdickt sind und dadurch die Herstellung des Estriches erschwert wird. Dadurch führen die unterschiedlich dicken Rohrleitungen beispielsweise zu einer verringerten mechanischen Stabilität des fertigen Estriches. Zudem ist man aus diesem Grund in der Wahl der Dicke der Isolierschicht beschränkt und kann das Problem der erhöhten Heizleistung durch die Anbindeleitungen nur in einem begrenzten Ausmaß verringern. Es wird deshalb weiter nach Lösungen für den unerwünschten erhöhten Wärmeeintrag durch Anbindeleitungen gesucht, durch den eine gleichmäßigere Verteilung auch der mechanischen Unebenheit gewährleistet ist.

Eine Möglichkeit, die mechanische Unebenheit der unterschiedlich isolierten Rohrleitungen zu verringern, besteht in der Einbringung einer Hohlkammerplatte als Zwischenschicht. Hohlkammerplatten vermögen durch ihre Konstruktionsweise mechanische Unebenheiten auszugleichen. Die Hohlkammerplatte besitzt auch eine weitere isolierende und befestigungssichernde Funktion für die auf der Isolierplatte verlaufenden und für die Beheizung des Raumes vorgesehenen Rohrleitungen. Außerdem sichert die Hohlkammerplatte das oder die Befestigungsmittel zum Befestigen der Rohrleitungen auf der Isolierplatte mechanisch, beispielsweise gegen Herausreißen. Hohlkammerplatten sind als Unterlegplatten für Fußbodenheizungen bekannt. Ein Beispiel aus dem Stand der Technik gibt das Dokument WO2016066240A1.

Eine weitere Möglichkeit, mechanische Unebenheiten zu vermeiden, besteht in der Unterbringung der Anbindeleitungen in die Isolierplatte, wodurch die Anbindeleitungen nicht mehr wie in dem vorherigen Maße mechanisch bei der Konstruktion des darüberliegenden Fußbodens in Erscheinung treten und gleichzeitig isoliert werden.

Das deutsche Gebrauchsmuster DE202016002037U1 beschreibt eine Vorrichtung zur Flächentemperierung in Bereichen mit durchlaufenden Zuleitungen oder Anbindeleitungen für Heizkreisverteiler von Flächentemperierungen, wobei ein Anbindeleitungselement und ein Abdeckelement vorgesehen sind, und wobei in das Anbindeleitungselement Rohrführungskanäle für durchlaufende Anbindeleitungen eingeschnitten sind, und auf das Anbindeleitungselement ein Abdeckelement aufgebracht ist, und wobei das Abdeckelement auf seiner Unterseite eine selbstklebende Schicht aufweist, und das Abdeckelement auf seiner Oberseite mit Mitteln versehen ist, die zur Verlegung von Rohren eines Heizkreises der Flächentemperierungen geeignet sind.

Das Problem der mechanischen Unebenheit bleibt bei dieser Konstruktionsweise jedoch bestehen, wenn auch in geringerem Ausmaß. Aus diesem Grund ist man oft weiterhin gewillt, eine Hohlkammerplatte über der Isolierschicht einzusetzen, um auch die restlichen Unebenheiten noch auszugleichen.

Ein Problem ist dabei, dass bei der Verwendung einer Hohlkammerplatte die darunterliegenden Anbindeleitungen, die in der darunterliegenden Isolierplatte eingelassen sind, nicht erkannt oder erfühlt werden können, und diese dadurch Gefahr laufen, bei der Befestigung der darüberliegenden Teile und insbesondere der darüberliegenden Rohrleitungen zum Temperieren des darüberliegenden Raumes beschädigt zu werden.

Es stellt sich deshalb die Aufgabe, eine Vorrichtung zum Temperieren von Fußböden in Bauwerken mit Verringerung der unerwünschten Wärmeproduktion im Bereich von Anbindeleitungen zur Verfügung zu stellen, welche die unerwünschte zusätzliche Beheizung von Räumen, in denen Anbindeleitungen vorhanden sind, verringert, und den dadurch verursachten unerwünschten Wärmeverlust bei der Durchleitung des Wärmeträgers in benachbarte zu beheizende Räume reduziert, wobei gleichzeitig eine sichere und einfache Montage der Rohrleitungen ohne eine Beschädigung der Anbindeleitungen ermöglicht wird. Die vorliegende Erfindung löst diese Aufgabe durch eine Vorrichtung zum Temperieren von Fußböden in Bauwerken mit Verringerung der unerwünschten Wärmeproduktion im Bereich von Anbindeleitungen, indem zwischen den in die Isolierplatten eingelassenen Anbindeleitungen und den weiteren Rohrleitungen, die zur Beheizung des darüberliegenden Raumes dienen und die mit einem Befestigungsmittel an der Isolierplatte befestigt sind, eine visuell transparente, also durchsichtige, Hohlkammerplatte vorhanden ist, die durch ihre Durchsichtigkeit bei der Montage eine Beschädigung der darunterliegenden Rohrleitungen verhindert.

Durch die Erfindung können die Monteure während der Montage der Rohrleitungen, die zum Beheizen des Raumes dienen, in dem die Anbindeleitungen von dem Wärmereservoir durch den Etagengrund geführt werden, auf der Isolierplatte durch die Hohlkammerplatte hindurch sehen, und beim Befestigen der daraufliegenden Rohrleitungen die Beschädigung der darunterliegenden Rohrleitungen vermeiden.

Die Vorrichtung der vorliegenden Erfindung wird in den überwiegenden Fällen zum Beheizen der Räume durch Fußböden genutzt, jedoch gibt es auch Temperierungssysteme, die auf die gleiche Weise zum Kühlen von Räumen genutzt werden. Die vorliegende Erfindung ist für diese Zwecke ebenfalls nutzbar. Dies gilt auch für Systeme, die beide Temperierungsvorgänge, also Beheizen und Kühlen, beispielweise zu verschiedenen Jahreszeiten, nutzen. Weiterhin ist die vorliegende Erfindung auch für Temperierungssysteme nutzbar, die eine Beheizung oder Kühlung der Räume nicht durch den Fußboden, sondern durch die Wände oder durch die Deckenwände als Raumabschlüsse oder durch mehrere der genannten Raumabschlüsse vornehmen oder durch einen oder mehrere der genannten Raumabschlüsse und durch den Fußboden vornehmen.

Beansprucht wird insbesondere eine Vorrichtung zum Temperieren von Fußböden oder Wänden in Bauwerken mit Verringerung der unerwünschten Wärmeproduktion im Bereich von Anbindeleitungen, enthaltend
- ein Bauwerk mit mehreren Stockwerken, welches in einem Stockwerk ein Wärmereservoir enthält, in welchem ein gegenüber der Umgebung erhitzter Wärmeträger zum Erwärmen der Vorrichtung bereitgestellt wird,
- Rohrleitungen, welche aus dem Wärmereservoir in einen Verteiler führen, und ausgehend von diesem Verteiler über einen Durchlass durch die Decke oder den Etagengrund des zu temperierenden Stockwerkes geführt werden, so dass ausgehend von dem Durchlass eine Vielzahl von Rohrleitungen in und durch die zu temperierenden Räume geführt wird, wobei
- der Boden mit einer Isolierplatte bedeckt ist, in die die aus dem Wärmereservoir kommenden Rohrleitungen in Kanäle eingelassen sind, und diese Rohrleitungen in der Isolierplatte Anbindeleitungen sind, die zum Durchleiten des Wärmeträgers in benachbarte Räume nutzbar sind und wobei über der Isolierplatte zwischen der Isolierplatte und dem Fußboden mit einem Befestigungsmittel weitere Rohrleitungen zum Durchleiten eines Wärmeträgers angebracht sind, die durch ihre räumliche Nähe zum darüberliegenden Fußboden zur Beheizung des darüberliegenden Raumes nutzbar sind, und
- die Isolierplatte und die daraufliegenden Rohrleitungen mit einem Fußboden bedeckt sind,
und welche dadurch gekennzeichnet ist, dass
- über der Isolierplatte und unter den darüberliegenden Rohrleitungen zum Beheizen und dem Fußboden eine weitere Platte vorhanden ist, die aus Hohlkammern aufgebaut ist und die visuell transparent ist.

Die visuell transparente Hohlkammerplatte kann aus einem beliebigen Material gefertigt sein. Besonders geeignet sind hierzu durchsichtige Kunststoffe.

Die Anbindeleitungen werden dabei in der Isolierplatte zu den zu beheizenden benachbarten Räumen geleitet und treten aus der Isolierplatte in dem zu beheizenden benachbarten Raum aus der Isolierplatte durch einen senkrechten Kanal aus der Isolierplatte hervor. Dies ist als Beispiel gezeigt in dem bereits genannten Dokument DE202016002037U1. Die Rohrleitungen werden dann in den zu beheizenden Räumen in bekannter Weise kreisförmig oder mäanderförmig zum Wärmetausch unterhalb des Fußbodens geführt. Bei den Rohrleitungen handelt es sich in einer bevorzugten Ausführungsform um flexible Kunststoffrohre. Es können jedoch beispielhaft auch Hartkunststoffschläuche verwendet werden oder Metall-Kunststoff-Verbundrohre.

Zur Ausführung der vorliegenden Erfindung wird eine getrennte Rohrführung gewählt, durch die Anbindeleitungen in dem Raum, in dem Anbindeleitungen durch den Etagengrund führen, und Rohrleitungen, die zum Beheizen dieses Raumes dienen, getrennt geführt werden. Die Anbindeleitungen können dabei in der Isolierplatte in beliebiger räumlicher Anordnung und in beliebiger räumlicher Anordnung im Vergleich zu den über der Isolierplatte liegenden Rohrleitungen zum Beheizen geführt werden. Es ist beispielweise möglich, die Anbindeleitungen zunächst parallel in der Isolierplatte zu den Rohrleitungen zu führen, die zum Beheizen genutzt werden, und dann in der Isolierplatte eine rechtwinklige Abzweigung in den zu beheizenden Raum vorzunehmen, während die zum Beheizen vorgesehenen Rohrleitungen in bekannter Weise kreisförmig oder mäanderförmig durch den zu beheizenden Raum geführt werden. Es ist jedoch ebenfalls möglich, die Anbindeleitungen nach der Einmündung von dem Kanal durch den Etagengrund in der Isolierplatte rechtwinklig abzweigend oder gewinkelt zur Überbrückung der Tiefe eines Türholms parallel entlang einer Raumwand zu führen und die zum Beheizen vorgesehenen Rohrleitungen in bekannter Weise kreisförmig oder mäanderförmig durch den zu beheizenden Raum zu führen.

Ebenfalls spielt es für die Ausführung der Erfindung keine Rolle, in welche Räume die zum Beheizen vorgesehenen Rohrleitungen führen und dann durch den Etagenboden zum Wärmereservoir zurückgeführt werden. Es spielt ebenfalls keine Rolle, in welche Zahl an zu beheizenden Räumen die Anbindeleitungen geführt werden und in welcher Aufteilung. In einer bevorzugen Anordnung werden die Anbindeleitungen für alle benachbarten Räume durch die Isolierplatte geführt und nur die Rohrleitungen zum Beheizen des Raumes, in dem die Anbindeleitungen durch den Etagengrund führen, werden über der Isolierplatte zum Wärmetausch mit dem zu beheizenden Raum geführt. Es liegt auch im Rahmen der Erfindung, auch wenn dies selten vorkommt, dass Anbindeleitungen für einen beliebigen Teil der Räume durch die Isolierplatten geführt werden, und die Rohrleitungen zum Beheizen für einen beliebigen Teil der Räume weiterhin über der Isolierplatte geführt werden.

In einer weiteren Ausführungsform der Erfindung befindet sich zwischen der Isolierplatte und der Hohlkammerplatte eine Gewebe-Raster-Folie. Diese Gewebe-Raster-Folie dient zur vereinfachten und genaueren Positionierung der Hohlkammerplatte und der darüberliegenden Rohrleitungen an der Isolierplatte. Hierzu befinden sich in einer weiteren vorteilhaften Ausführungsform auf der Hohlkammerplatte vorgeprägte Vertiefungen oder Formungen, die in entsprechende Raster der Gewebe-Raster-Folie eingreifen und die Positionierung der Hohlkammerplatte erlauben. Durch die Gewebe-Raster-Folie kann die Verlegeposition der Hohlkammerplatte ohne das Erfordernis eines Vermessungsschrittes gut definiert werden.

In einer weiteren Ausführungsform der Erfindung befindet sich zwischen der Isolierplatte und dem Etagengrund eine weitere Gewebe-Raster-Folie. Dadurch ist auch die darüberliegende Isolierplatte leichter positionierbar. Die Gewebe-Raster-Folie ist hierzu mit vorgeprägten Rastern, also Vertiefungen oder Formungen, versehen, in die hierzu passende Vertiefungen oder Formungen auf der Rückseite der Isolierplatten eingreifen können.

In einer weiteren Ausfuhrungsform der Erfindung sitzt an mindestens einer seitlichen Wand eines zu temperierenden Raumes ein Randdämmstreifen, der die Isolierplatte und den Fußboden gegen die Wand isoliert. Der Randdämmstreifen kann aus einem beliebigen isolierenden Material gefertigt sein. Diese Anordnung wird bei der Montage von Fußbodenheizungen oft gewählt und bietet Vorteile bei der Isolierung der Fußbodenheizung gegen die seitliche Wand des Raumes. In einer weiteren Ausführungsform der Erfindung befindet sich auf der Hohlkammerplatte eine Abdichtungsfolie, die mit einem Klebestreifen gegen die Wand oder gegen den sich zwischen dem Fußboden und der Wand befindenden Randdämmstreifen und die Hohlkammerplatte befestigt ist. Auch eine einzelne Befestigung ist möglich. Dadurch lässt sich die Isolierplatte leichter im Raum positionieren.

Zur Ausführung der Erfindung kann die Isolierplatte aus jedem beliebigen isolierenden Material gefertigt sein. In einer beispielhaften Ausführungsform ist die Isolierplatte aus Styropor gefertigt.

Zur Ausführung der Vorrichtung der vorliegenden Erfindung zum Beheizen, Kühlen oder Temperieren eines Raumes werden die weiteren Gegenstände verwendet, die für Fußbodenheizungen zum Beheizen, Kühlen oder Temperieren von Räumen in Bauwerken bekanntermaßen erforderlich sind. Hierzu gehören beispielhaft Verteiler, Ventile, Temperaturthermostaten, Schläuche, Rohrleitungen und weitere Hilfsmittel. Diese Gegenstände sind dem Fachmann für Beheizungstechnik bekannt und können dem einschlägigen Stand der Technik entnommen werden.

Beansprucht wird auch die Verwendung einer Vorrichtung zum Beheizen oder Kühlen von Räumen. Obwohl die bevorzugte Verwendung der erfindungsgemäßen Vorrichtung in einer ausschließlichen Verwendung zum Beheizen von Räumen besteht, ist es prinzipiell auch möglich, diese zum Temperieren oder Kühlen von Räumen zu verwenden. Hierzu ist befindet sich zusätzlich zu dem Wärmereservoir am Ende der Rohrleitungen vor dem Verteiler ein Kältereservoir, von dem ausgehend sich die Rohrleitungen mit einem Kälteträger beaufschlagen und durchströmen lassen. Das Wärmereservoir, welches zum Beheizen genutzt wird, kann auch so geartet sein, dass sich dieses durch eine entsprechende Temperierung in ein Kältereservoir umfunktionieren lässt. In diesem Fall wird der Wärmeträger zum Kühlen eines Raumes je nach Bedarf auch als Kälteträger genutzt.

Beansprucht wird auch ein Verfahren zur Herstellung einer Vorrichtung zum Temperieren von Fußböden oder Wänden in Bauwerken mit Verringerung der unerwünschten Wärmeproduktion im Bereich von Anbindeleitungen. Dieses Verfahren ist üblicherweise als Montage einer Fußbodenheizung geartet. Hierzu ist es erforderlich, Isolierplatten bereitzustellen, in die die Rohrleitungen aus dem Wärmereservoir eingelassen sind. Die Isolierplatten enthalten hierzu in einer vorteilhaften Ausführungsform Kanäle, in die die Rohrleitungen eingelassen werden. Zur Herstellung dieser Kanäle hat sich das Verfahren des Heißschneidens als sehr vorteilhaft erwiesen. Dadurch können die Kanäle in den Isolierplatten hergestellt werden, ohne dass die mechanische Stabilität der Isolierplatte für das Anbringen der weiteren Rohrleitungen zwischen der Isolierplatte und dem Fußboden mit einem Befestigungsmittel in Mitleidenschaft gezogen wird. Ein Verfahren zum Heißschneiden von Kanälen in Isolierplatten ist beispielhaft beschrieben in dem Dokument DE10326029A1.

Zur Herstellung der vorliegenden Vorrichtung zum Beheizen, Kühlen oder Temperieren eines Raumes wird eine visuell transparente Hohlkammerplatte verwendet, so dass beim Befestigen der Rohrleitungen auf der Hohlkammerplatte eine Beschädigung der darunterliegenden in die Isolierplatte eingelassenen Rohrleitungen vermieden wird. Die Hohlkammerplatte gleicht mechanische Unebenheiten aus und besitzt eine weitere isolierende Funktion und sichert das oder die Befestigungsmittel zum Befestigen der Rohrleitungen auf der Isolierplatte mechanisch, beispielsweise gegen Herausreißen.

Beansprucht wird ein Verfahren zur Herstellung einer Vorrichtung zum Temperieren von Fußböden oder Wänden in Bauwerken mit Verringerung der unerwünschten Wärmeproduktion im Bereich von Anbindeleitungen, enthaltend die Verfahrensschritte
- Aufbringen einer Isolierplatte auf einen Etagengrund,
- Ausschneiden von Rohrleitungskanälen in die Isolierplatte und Einlegen von Rohrleitungen, die als Anbindeleitungen zum Durchleiten des Wärmeträgers in benachbarte Räume vorgesehen sind,
und welches dadurch gekennzeichnet ist, dass
- nach dem Einlegen der Rohrleitungen in die Rohrleitungskanäle eine visuell transparente Hohlkammerplatte auf die Isolierplatte aufgebracht wird, und
- auf die Hohlkammerplatte weitere Rohrleitungen, die zum Beheizen des darüberliegenden Raumes vorgesehen sind, aufgebracht werden, indem diese weiteren Rohrleitungen durch die Hohlkammerplatte hindurch durch Befestigungsmittel an der Isolierplatte befestigt werden, und die Beschädigung der darunterliegenden Rohrleitungen, die als Anbindeleitungen vorgesehen sind, durch visuelle Kontrolle durch die Hohlkammerplatte hindurch vermieden wird.

In einer Ausführungsform dieses Verfahrens wird das Ausschneiden durch Heißschneiden vorgenommen. In einer weiteren Ausführungsform dieses Verfahrens handelt es sich bei dem Befestigungsmittel zum Befestigen der Rohrleitungen zum Beheizen des Raumes auf der Isolierplatte um Tackersystemclips. Solche Befestigungsmittel für Rohrleitungen von Fußbodenheizungen sind dem Fachmann bekannt. Beispiele lehren die Dokumente DE10331992A1 oder DE102013003184A1. Für die vorliegende Erfindung kann jedoch jedes Befestigungsmittel verwendet werden, welches zur Befestigung von Rohrleitungen an Isolierplatten durch eine Hohlkammerplatte hindurch für Fußbodenheizungen geeignet ist.

Zur Herstellung der vorliegenden Vorrichtung ist es möglich, nach dem Einlegen der Rohrleitungen in die Rohrleitungskanäle in der Isolierplatte und vor dem Aufbringen der transparenten Hohlkammerplatte auf die Isolierplatte eine Gewebe-Raster-Folie auf die Isolierplatte aufzubringen. Diese ist dann zwischen der Isolierplatte und der Hohlkammerplatte positioniert. Dadurch lässt sich die Hohlkammerplatte leichter auf der Isolierplatte positionieren. Hierzu befinden sich auf der Hohlkammerplatte vorgeprägte Vertiefungen oder Formungen, die in entsprechende Raster der Gewebe-Raster-Folie eingreifen und die Positionierung der Hohlkammerplatte erlauben. Durch diese weitere Gewebe-Raster-Folie kann die Verlegeposition der Hohlkammerplatte ohne das Erfordernis eines Vermessungsschrittes gut definiert werden.

Zur Herstellung der vorliegenden Vorrichtung ist es außerdem möglich, vor dem Aufbringen der Isolierplatte auf dem Etagengrund eine Gewebe-Raster-Folie aufzubringen. Dadurch lässt sich die Isolierplatte ohne einen Vermessungsschritt auf dem Etagengrund aufbringen, wenn auf der der Gewebe-Raster-Platte zugewandten Seite der Isolierplatte Vertiefungen oder Formungen, die in entsprechende Raster der Gewebe-Raster-Folie eingreifen und die Positionierung der Isolierplatte erlauben, vorhanden sind. Durch die Gewebe-Raster-Folie können die Verlegepositionen der Rohrleitungen ohne das Erfordernis eines Vermessungsschrittes gut definiert werden.

Zur Herstellung der vorliegenden Vorrichtung kann zwischen die Isolierplatte und die seitliche Wand des zu temperierenden Raumes ein Randdämmstreifen angebracht werden und die dadurch entstehende Ecke mit einer Folie abgedeckt werden, die dann auf der Wand und auf der Isolierplatte oder der Hohlkammerplatte mit einem Klebestreifen befestigt wird. Dadurch lässt sich die Isolierplatte gegen die seitliche Raumwand definiert befestigen.

Die Erfindung besitzt den Vorteil, eine unerwünschte Beheizung des Raumes, in dem die Anbindeleitungen durch den Etagengrund führen, durch eine separate Führung der Anbindeleitungen in hierzu verlegten Kanälen in der Isolierplatte zu vermeiden, wobei gleichzeitig eine Hohlkammerplatte auf der Isolierplatte verlegt werden kann, ohne dass die Gefahr einer Beschädigung der darunter verlaufenden Anbindeleitungen bei einer weiteren Verlegung von Heizleitungen über der Hohlkammerplatte durch ein Befestigungssystem wie beispielweise Tackersystemclips besteht. Erreicht wird dies durch den Einsatz einer Hohlkammerplatte, die bei Fußbodenheizungen zum Ausgleich von mechanischen Unebenheiten genutzt wird, und die visuell transparent ist. Die Hohlkammerplatten können auch deshalb verwendet werden, weil diese eine weitere isolierende Funktion besitzen und das oder die Befestigungsmittel zum Befestigen der Rohrleitungen auf der Isolierplatte mechanisch, beispielsweise gegen Herausreißen, sichern.

Die Erfindung wird durch ein Beispiel mit einer Zeichnung (FIG.l) genauer dargestellt, wobei dieses Beispiel die Erfindung nur beispielhaft darstellt und die Erfindung innerhalb des Schutzumfangs nicht auf diese Ausführungsform beschränkt ist.

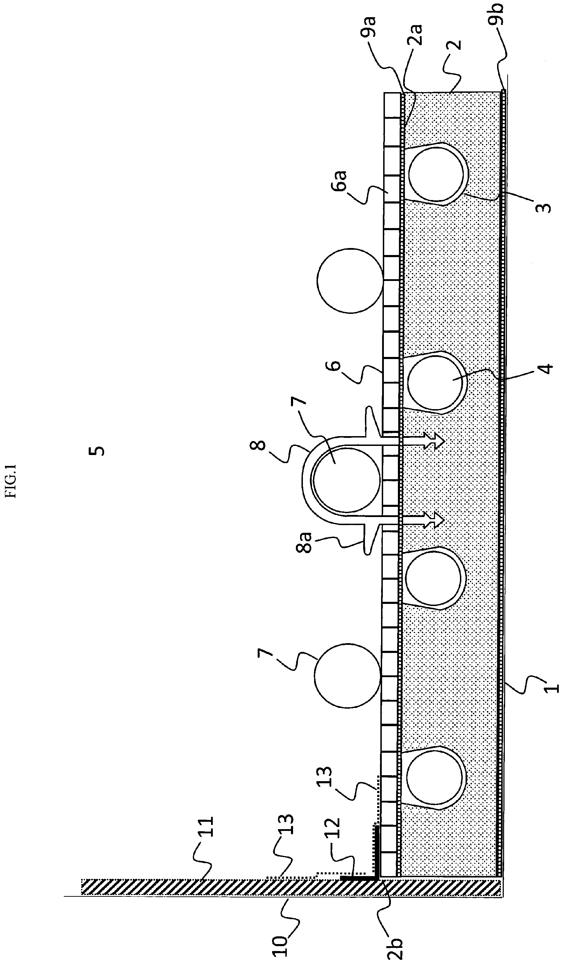

Die Zeichnung (FIG.l) zeigt eine Ausführungsform der Erfindung in seitlicher Ansicht als Schnittzeichnung. Ein Etagengrund **(1)** ist mit einer Isolierplatte **(2)** versehen, die durch ein geeignetes Verfahren, wie beispielsweise Heißschneiden, mit Kanälen **(3)** versehen wird. In die Kanäle **(3)** sind Anbindeleitungen **(4)** eingelassen, die durch die Isolierplatte **(2)** geführt werden, und in weiteren benachbarten Räumen außerhalb dieser Zeichnung durch die Isolierplatte **(2)** hindurch auf deren Oberfläche **(2a)** geführt werden (hier nicht dargestellt). Dadurch geben die Anbindeleitungen **(4)** weniger unerwünschte Wärme in den hier in der Zeichnung gezeigten über den Anbindeleitungen liegenden Raum **(5)** ab. Über der Isolierplatte **(2)** ist eine Hohlkammerplatte **(6)** aufgelegt. Diese kann beliebig dick sein und in beliebig viele Kammern **(6a)** aufgeteilt sein. Auf die Hohlkammerplatte **(6)** werden weitere Rohrleitungen **(7)** verlegt, die durch den Etagengrund **(1)** und die Isolierplatte **(2)** hindurch direkt auf die Ebene über der Isolierplatte **(2)** geführt werden. Diese dienen nur zur Beheizung des in der Zeichnung gezeigten Raumes **(5).** Befestigt werden diese Rohrleitungen **(7)** über der Isolierplatte **(2)** mit sogenannten Tackersystemclips **(8),** die im Stand der Technik bekannt sind. Diese besitzen seitliche Nasen **(8a),** um diese besser in die Isolierplatte **(2)** einschlagen zu können. Obwohl die Isolierplatte **(2)** bereits mechanische Unebenheiten und insbesondere die Unebenheiten der Anbindeleitungen **(4)** in den Kanälen **(3)** in der Isolierplatte **(2)** ausgleicht, sind diese Unebenheiten nicht vollständig ausgeglichen. Da die Hohlkammerplatten **(6)** aus dem Stand der Technik die Sicht auf die darunterliegenden Anbindeleitungen **(4)** versperren, können die Tackersystemclips **(8)** bei der Befestigung der Rohrleitungen **(7)** über der Isolierplatte **(2)** zum Beheizen des Raumes **(5)** die in der Isolierplatte **(2)** verlaufenden Rohrleitungen als Anbindeleitungen **(4)** beschädigen. Aus diesem Grund wird im Stand der Technik auf die Hohlkammerplatte **(6)** verzichtet. Die Hohlkammerplatte **(6)** ist in dieser Zeichnung zur Ausführung der Erfindung visuell transparent, also durchsichtig gestaltet, so dass die Rohrleitungen **(7)** über der Isolierplatte **(2)** zum Beheizen des Raumes **(5)** befestigt werden können und gleichzeitig eine Beschädigung der darunterliegenden Anbindeleitungen **(4)** vermieden wird. Um die Hohlkammerplatte **(6)** leichter gegen die Isolierplatte **(2)** positionieren zu können, ist zwischen der Isolierplatte **(2)** und der Hohlkammerplatte **(6)** noch eine Gewebe-Raster-Folie **(9a)** eingelegt. Auch zwischen dem Etagengrund **(1)** und der Isolierplatte **(2)** ist zur leichteren Positionierung der Isolierplatte **(2)** eine Gewebe-Raster-Folie **(9b)** eingelegt. Zur weiteren Isolierung der Isolierplatte **(2)** und der Rohrleitungen **(7)** gegen die seitliche Wand **(10)** des Raumes **(5)** befindet sich zwischen der Isolierplatte **(2)** und der seitlichen Wand **(10)** des Raumes **(5)** noch ein Randdämmstreifen **(11).** Dieser ist mit einer Abdichtungsfolie **(12)** in der Ecke **(2b)** zur Isolierplatte **(2)** gegen diese abgedichtet. Zur Befestigung der Abdichtungsfolie **(12)** wird ein Klebestreifen **(13)** verwendet.

### Bezugszeichenliste

- 1: Etagengrund
- 2: Isolierplatte
- 2a: Oberfläche der Isolierplatte
- 2b: Ecke zwischen Isolierplatte und seitlicher Wand des Raumes
- 3: Kanäle in der Isolierplatte
- 4: Anbindeleitung
- 5: Raum
- 6: Hohlkammerplatte
- 6a: Kammer der Hohlkammerplatte
- 7: Rohrleitung zum Beheizen des Raumes
- 8: Tackersystemclip
- 8a: Seitliche Nase des Tackersystemclips
- 9a,9b: Gewebe-Raster-Folie
- 10: Seitliche Wand des Raumes
- 11: Randdämmstreifen
- 12: Abdichtungsfolie
- 13: Klebestreifen

## Patentansprüche

1. Vorrichtung zum Temperieren von Fußböden oder Wänden in Bauwerken mit Verringerung der unerwünschten Wärmeproduktion im Bereich von Anbindeleitungen (4), enthaltend
• ein Bauwerk mit mehreren Stockwerken, welches in einem Stockwerk ein Wärmereservoir enthält, in welchem ein gegenüber der Umgebung erhitzter Wärmeträger zum Erwärmen der Vorrichtung bereitgestellt wird,
• Rohrleitungen (4,7), welche aus dem Wärmereservoir in einen Verteiler führen, und ausgehend von diesem Verteiler über einen Durchlass durch die Decke oder den Etagengrund (1) des zu temperierenden Stockwerkes geführt werden, so dass ausgehend von dem Durchlass eine Vielzahl von Rohrleitungen (4,7) in und durch die zu temperierenden Räume geführt wird, wobei
• der Boden mit einer Isolierplatte (2) bedeckt ist, in die die aus dem Wärmereservoir kommenden Rohrleitungen (4) in Kanäle (3) eingelassen sind, und diese Rohrleitungen (4) in der Isolierplatte (2) Anbindeleitungen (4) sind, die zum Durchleiten des Wärmeträgers in benachbarte Räume nutzbar sind und wobei über der Isolierplatte (2) zwischen der Isolierplatte (2) und dem Fußboden mit einem Befestigungsmittel (8) weitere Rohrleitungen (7) zum Durchleiten des Wärmeträgers angebracht sind, die durch ihre räumliche Nähe zum darüberliegenden Fußboden zur Beheizung des darüberliegenden Raumes (5) nutzbar sind, und
• die Isolierplatte (2) und die daraufliegenden Rohrleitungen (7) mit einem Fußboden bedeckt sind,
**dadurch gekennzeichnet, dass**
• über der Isolierplatte (2) und unter den darüberliegenden Rohrleitungen (7) zum Beheizen und dem Fußboden eine weitere Platte (6) vorhanden ist, die aus Hohlkammern (6a) aufgebaut ist und die visuell transparent ist.

2. Vorrichtung nach Anspruch 1, **dadurch gekennzeichnet, dass** sich zwischen der Isolierplatte (2) und der Hohlkammerplatte (6) eine Gewebe-Raster-Folie (9a) befindet.

3. Vorrichtung nach einem der Ansprüche 1 oder 2, **dadurch gekennzeichnet, dass** sich zwischen der Isolierplatte (2) und dem Etagengrund (1) eine weitere Gewebe-Raster-Folie (9b) befindet.

4. Vorrichtung nach einem der Ansprüche 1 bis 3, **dadurch gekennzeichnet, dass** an mindestens einer seitlichen Wand (10) eines zu temperierenden Raumes ein Randdämmstreifen (11) sitzt, der die Isolierplatte (2) und den Fußboden gegen die seitliche Wand (10) isoliert.

5. Vorrichtung nach einem der Ansprüche 1 bis 4, **dadurch gekennzeichnet, dass** sich auf der Hohlkammerplatte (6) eine Abdichtungsfolie (12) befindet, die mit einem Klebestreifen (13) gegen die seitliche Wand (10) oder gegen den sich zwischen dem Fußboden und der seitlichen Wand (10) befindenden Randdämmstreifen (11) und die Hohlkammerplatte (6) befestigt ist.

6. Vorrichtung nach einem der Ansprüche 1 bis 5, **dadurch gekennzeichnet, dass** die Isolierplatte (2) aus Styropor gefertigt ist.

7. Verwendung einer Vorrichtung nach einem Ansprüche 1 bis 6 zum Beheizen oder Kühlen von Räumen.

8. Verfahren zur Herstellung einer Vorrichtung nach einem der Ansprüche 1 bis 6, enthaltend die Verfahrensschritte
• Aufbringen einer Isolierplatte (2) auf einen Etagengrund (1),
• Ausschneiden von Rohrleitungskanälen (3) in die Isolierplatte (2) und Einlegen von Rohrleitungen (4), die als Anbindeleitungen (4) zum Durchleiten des Wärmeträgers in benachbarte Räume vorgesehen sind,
**dadurch gekennzeichnet, dass**
• nach dem Einlegen der Rohrleitungen (4) in die Rohrleitungskanäle (3) eine visuell transparente Hohlkammerplatte (6) auf die Isolierplatte (2) aufgebracht wird, und
• auf die Hohlkammerplatte (6) weitere Rohrleitungen (7), die zum Beheizen des darüberliegenden Raumes (5) vorgesehen sind, aufgebracht werden, indem diese weiteren Rohrleitungen (7) durch die Hohlkammerplatte (6) hindurch durch Befestigungsmittel (8) an der Isolierplatte (2) befestigt werden, und die Beschädigung der darunterliegenden Rohrleitungen (4), die als Anbindeleitungen (4) vorgesehen sind, durch visuelle Kontrolle durch die Hohlkammerplatte (6) hindurch vermieden wird.

9. Verfahren nach Anspruch 8, **dadurch gekennzeichnet, dass** das Ausschneiden durch Heißschneiden vorgenommen wird.

10. Verfahren nach einem der Ansprüche 8 oder 9, **dadurch gekennzeichnet, dass** es sich bei dem Befestigungsmittel (8) um Tackersystemclips (8) handelt.

11. Verfahren nach einem der Ansprüche 8 bis 10, **dadurch gekennzeichnet, dass** nach dem Einlegen der Anbindeleitungen (4) in die Rohrleitungskanäle (3) und vor dem Aufbringen der transparenten Hohlkammerplatte (6) auf die Isolierplatte (2) eine Gewebe-Raster-Folie (9a) auf die Isolierplatte (2) aufgebracht wird.

12. Verfahren nach einem der Ansprüche 8 bis 11, **dadurch gekennzeichnet, dass** vor dem Aufbringen der Isolierplatte (2) auf dem Etagengrund (1) eine Gewebe-Raster-Folie (9b) aufgebracht wird.

13. Verfahren nach einem der Ansprüche 8 bis 12, **dadurch gekennzeichnet, dass** zwischen die Isolierplatte (2) und die seitliche Wand (10) des zu temperierenden Raumes (5) ein Randdämmstreifen (11) angebracht wird und die dadurch entstehende Ecke (2b) mit einer Folie (12) abgedeckt wird, die dann auf der seitlichen Wand (10) und auf der Isolierplatte (2) mit einem Klebestreifen (13) befestigt wird.

## Claims

1. Device for controlling the temperature of floors or walls in structures by reducing the unwanted production of heat in the area of connection lines (4), comprising
• a structure with several storeys, which has a heat reservoir on one storey, in which a heat carrier which is heated with respect to the environment is provided for heating the device,
• pipelines (4,7), which lead from the heat reservoir into a distributor system and are guided from said distributor system via an opening through the ceiling or the floor base (1) of the storey whose temperature is to be controlled, so that from the opening a plurality of pipelines (4,7) are guided in and through the rooms whose temperature is to be controlled, wherein
• the floor is covered with an insulating board (2), in which the pipelines (4) coming from the heat reservoir are laid into channels (3), and said pipelines (4) are connection lines (4) in the insulating board (2) which connection lines can be used for channelling the heat carrier into adjacent rooms, and wherein above the insulating board (2) between the insulating board (2) and the floor additional pipelines (7) are attached by means of a fastening means (8) for channelling the heat carrier, which due their proximity to the overlying floor can be used for heating the room (5) above, and
• the insulating board (2) and the pipelines (7) lying on the latter are covered by a floor, **characterised in that**
• an additional board (6) is provided over the insulating board (2) and underneath the overlying pipelines (7) used for heating and the floor, which board is constructed from hollow chambers (6a) and which is visually transparent.

2. Device according to claim 1, **characterised in that** between the insulating board (2) and the hollow chamber board (6) there is a fabric-grid film (9a).

3. Device according to either claim 1 or claim 2, **characterised in that** between the insulating board (2) and the floor base (1) there is an additional fabric-grid film (9b).

4. Device according to any of claims 1 to 3, **characterised in that** on at least one side wall (10) of a room whose temperature is to be controlled there is a rim insulation strip (11) which insulates the insulating board (2) and the floor from the side wall (10).

5. Device according to any of claims 1 to 4, **characterised in that** on the hollow chamber board (6) there is a sealing film (12) which is secured by an adhesive strip (13) to the side wall (10) or to the rim insulation strip (11) located between the floor and the side wall (10) and the hollow chamber board (6).

6. Device according to any of claims 1 to 5, **characterised in that** the insulating board (2) is made of polystyrene.

7. Use of a device according to any of claims 1 to 6 for heating or cooling rooms.

8. Method for producing a device according to any of claims 1 to 6, comprising the method steps
• applying an insulating board (2) to a floor base (1),
• cutting out pipeline channels (3) from the insulating board (2) and inserting pipelines (4), which are provided as connection lines (4) for conducting the heat carrier into adjacent rooms,
**characterised in that**
• after inserting the pipelines (4) into the pipeline channels (3) a visually transparent hollow chamber board (6) is applied onto the insulating board (2), and
• additional pipelines (7) for heating the room (5) above are attached to the hollow chamber board (6), **in that** said additional pipelines (7) are secured through the hollow chamber board (6) by fastening means (8) onto the insulating board (2), and damage to the underlying pipelines (4), which are provided as connection lines (4), is avoided by a visual check through the hollow chamber board (6).

9. Method according to claim 8, **characterised in that** the cutting out is performed by means of a hot cutting process.

10. Method according to either claim 8 or claim 9, **characterised in that** the fastening means (8) consist of tacker system clips (8).

11. Method according to any of claims 8 to 10, **characterised in that** after placing the connection lines (4) into the pipeline channels (3) and before applying the transparent hollow chamber board (6) onto the insulating board (2) a fabric-grid-film (9a) is applied onto the insulating board (2).

12. Method according to any of claims 8 to 11, **characterised in that** prior to placing the insulating board (2) onto the floor base (1) a fabric-grid-film (9b) is applied.

13. Method according to any of claims 8 to 12, **characterised in that** between the insulating board (2) and the side wall (10) of the room (5) whose temperature is to be controlled a rim insulation strip (11) is applied and the corner (2b) formed thereby is covered with a film (12) which is then secured onto the side wall (10) and onto the insulating board (2) by an adhesive strip (13).

## Revendications

1. Dispositif de climatisation de planchers ou murs dans des bâtiments avec réduction de la production non souhaitée de chaleur dans la zone de conduites de raccordement (4), contenant
- un bâtiment avec plusieurs étages, lequel bâtiment contient dans un étage un réservoir de chaleur dans lequel un fluide caloporteur, chauffé par rapport à l'environnement, est mis à disposition pour chauffer le dispositif,
- des conduites (4,7), qui conduisent du réservoir de chaleur à un distributeur, et qui sont guidées à partir de ce distributeur par l'intermédiaire d'un passage à travers le plafond ou le sol d'étage (1) de l'étage à climatiser, de telle sorte que, à partir du passage, plusieurs conduites (4,7) sont guidées dans et à travers les pièces à climatiser, dans lequel
- le plancher est couvert d'une plaque isolante (2), dans laquelle les conduites (4) provenant du réservoir de chaleur sont introduites dans des canaux (3), et ces conduites (4) dans la plaque isolante (2) sont des conduites de raccordement (4) qui peuvent être utilisées pour faire passer le fluide caloporteur dans des pièces voisines et dans lequel, au-dessus de la plaque isolante (2) entre la plaque isolante (2) et le plancher, d'autres conduites (7) sont installées avec un moyen de fixation (8) afin de faire passer le fluide caloporteur, lesquelles autres conduites peuvent être utilisées pour chauffer la pièce située au-dessus (5) grâce à leur proximité spatiale avec le plancher situé au-dessus, et
- la plaque isolante (2) et les conduites situées au-dessus (7) sont couvertes avec un plancher,
**caractérisé en ce que**
- au-dessus de la plaque isolante (2) et au-dessous des conduites situées au-dessus (7) pour chauffer et du plancher, une autre plaque (6) est présente, laquelle est construite à partir de cellules creuses (6a) et est visuellement transparente.

2. Dispositif selon la revendication 1, **caractérisé en ce qu'**une feuille de tissu tramée (9a) se trouve entre la plaque isolante (2) et la plaque de cellules creuses (6).

3. Dispositif selon l'une quelconque des revendications 1 ou 2, **caractérisé en ce qu'**une autre feuille de tissu tramée (9b) se trouve entre la plaque isolante (2) et le sol d'étage (1).

4. Dispositif selon l'une quelconque des revendications 1 à 3, **caractérisé en ce que**, au niveau d'au moins un mur latéral (10) d'une pièce à climatiser, se trouve un ruban isolant de bordure (11) qui isole du mur latéral (10) la plaque isolante (2) et le plancher.

5. Dispositif selon l'une quelconque des revendications 1 à 4, **caractérisé en ce que** sur la plaque de cellules creuses (6) se trouve une feuille d'étanchéité (12) qui est fixée avec un ruban adhésif (13) contre le mur latéral (10) ou contre le ruban isolant de bordure (11) se trouvant entre le plancher et le mur latéral (10), et la plaque de cellules creuses (6).

6. Dispositif selon l'une quelconque des revendications 1 à 5, **caractérisé en ce que** la plaque isolante (2) est fabriquée en polystyrène expansé.

7. Utilisation d'un dispositif selon l'une quelconque des revendications 1 à 6 pour chauffer ou refroidir des pièces.

8. Procédé de fabrication d'un dispositif selon l'une quelconque des revendications 1 à 6, contenant les étapes de procédé
- pose d'une plaque isolante (2) sur un sol d'étage (1),
- découpe de canaux de conduite (3) dans la plaque isolante (2) et mise en place de conduites (4) qui sont prévues comme conduites de raccordement (4) pour faire passer le fluide caloporteur dans des pièces voisines,
**caractérisé en ce que**
- après la mise en place des conduites (4) dans les canaux de conduite (3), une plaque de cellules creuses (6) visuellement transparente est posée sur la plaque isolante (2), et
- d'autres conduites (7), qui sont prévues pour chauffer la pièce située au-dessus (5), sont posées sur la plaque de cellules creuses (6), lesquelles autres conduites (7) sont fixées à la plaque isolante (2) par des moyens de fixation (8) à travers la plaque de cellules creuses (6), et la détérioration des conduites situées au-dessous (4), qui sont prévues comme conduites de raccordement (4), est empêchée par contrôle visuel à travers la plaque de cellules creuses (6).

9. Procédé selon la revendication 8, **caractérisé en ce que** la découpe est effectuée par coupage à très haute température.

10. Procédé selon l'une quelconque des revendications 8 ou 9, **caractérisé en ce que** les moyens de fixation (8) sont des clips de système Tacker (8).

11. Procédé selon l'une quelconque des revendications 8 à 10, **caractérisé en ce que**, après la mise en place des conduites de raccordement (4) dans les canaux de conduite (3) et avant la pose de la plaque de cellules creuses (6) transparente sur la plaque isolante (2), une feuille de tissu tramée (9a) est posée sur la plaque isolante (2).

12. Procédé selon l'une quelconque des revendications 8 à 11, **caractérisé en ce que**, avant la pose de la plaque isolante (2) sur le sol d'étage (1), une feuille de tissu tramée (9b) est posée.

13. Procédé selon l'une quelconque des revendications 8 à 12, **caractérisé en ce qu'**un ruban isolant de bordure (11) est posé entre la plaque isolante (2) et le mur latéral (10) de la pièce à climatiser (5) et l'angle (2b) ainsi formé est couvert avec une feuille (12) qui est ensuite fixée avec un ruban adhésif (13) sur le mur latéral (10) et sur la plaque isolante (2).
